# EUROPÄISCHE PATENTSCHRIFT

(11) **EP 2 902 963 B1**
(45) Veröffentlichungstag und Bekanntmachung des Hinweises auf die Patenterteilung: **05.10.2016**
(21) Anmeldenummer: 14198434.4
(22) Anmeldetag: 17.12.2014
(51) Int. Cl.: G06T 5/00

(54) **Verfahren zur Herstellung eines Abbilds eines Gegenstands**
Method for producing an image of an object
Procédé de fabrication d'une représentation d'un objet

(30) Priorität: 31.01.2014 AT 500732014
(43) Veröffentlichungstag der Anmeldung: 05.08.2015
(73) Patentinhaber: AIT Austrian Institute of Technology GmbH, 1220 Wien (AT)
(72) Erfinder: Huber-Mörk, Reinhold, 1220 Wien (AT); Stolc, Svorad, 831 01 Bratislava (SK); Mayer, Konrad, 1230 Wien (AT)
(74) Vertreter: Wildhack & Jellinek

(56) Entgegenhaltungen:
- ERNST BODENSTORFER ET AL: "High-speed line-scan camera with multi-line CMOS color sensor", COMPUTER VISION AND PATTERN RECOGNITION WORKSHOPS (CVPRW), 2012 IEEE COMPUTER SOCIETY CONFERENCE ON, IEEE, 16. Juni 2012 (2012-06-16), Seiten 9-14, XP032206751, DOI: 10.1109/CVPRW.2012.6238888 ISBN: 978-1-4673-1611-8
- BRANSILAV HOLLÄNDER ET AL: "Multi-view line-scan inspection system using planar mirrors", PROCEEDINGS OF SPIE, Bd. 8791, 23. Mai 2013 (2013-05-23), Seite 879118, XP055186907, ISSN: 0277-786X, DOI: 10.1117/12.2019464
- MASAYUKI TANIMOTO ET AL: "Description of 3D Video Coding Technology Proposal by Nagoya University", 98. MPEG MEETING; 28-11-2011 - 2-12-2011; GENEVA; (MOTION PICTURE EXPERT GROUP OR ISO/IEC JTC1/SC29/WG11),, Nr. m22567, 23. November 2011 (2011-11-23) , XP030051130,

## Beschreibung

Die Erfindung betrifft ein Verfahren zur Erstellung eines Abbilds eines Gegenstands mittels einer einen Flächensensor aufweisenden Bildaufnahmeeinheit gemäß dem Oberbegriff des Patentanspruchs 1.

Aus der Veröffentlichung high speed line-scan camera with multiline cmos color sensor, Bodenstorfer et al, computer vision and pattern recognition workshops (CVPRW), 2012 IEEE computer society conference on IEEE 16. Juni 2012, Seiten 9 bis 14, XP 032206751 ist es bekannt, Farb-TDI mittels CMOS-Chips durchzuführen und Moire-Effekte zu vermeiden.

Hintergrund der Erfindung ist das Problem, dass es bei herkömmlichen TDI-Verfahren häufig zu Aufnahmefehlern und Ungenauigkeiten kommt, wenn die Transportgeschwindigkeit des aufzunehmenden Gegenstands gegenüber der Bildaufnahmeeinheit variiert und auch, wenn der aufgenommene Gegenstand nicht vollkommen flach ist, sondern Bereiche aufweist, die zur Bildaufnahmeeinheit einen unterschiedlichen Abstand haben.

In diesen Fällen kann das Problem bestehen, dass aufgenommene TDI-Bilder unscharf sind und es aufgrund von Geschwindigkeitsschwankungen der Transporteinheit zu Bewegungsartefakten und Überlagerungen kommt.

Aufgabe der Erfindung ist es, diese genannten Probleme zu überwinden und ein Verfahren zur Verfügung zu stellen, mit dem Gegenstände unabhängig von der jeweiligen Transportgeschwindigkeit sowie unabhängig vom Abstand von der Transporteinheit scharf und korrekt und artefaktfrei abgebildet werden können.

Die Erfindung löst diese Aufgabe bei einem Verfahren der eingangs genannten Art mit den kennzeichnenden Merkmalen des Patentanspruchs 1.

Hierbei ist insbesondere von Vorteil, dass ein Abbild des aufgenommenen Gegenstands erstellt wird, der unabhängig von seinem Abstand zur Bildaufnahmeeinheit und unabhängig von seiner Transportgeschwindigkeit richtig und scharf dargestellt ist.

Um zusätzlich feststellen zu können, ob Schwankungen der Transportgeschwindigkeit oder Punkte mit unterschiedlichem Abstand von der Aufnahmeeinheit vorliegen, kann vorgesehen sein, dass als Bildabschnitte (A) Teilmengen der Matrix-Datenstruktur (Mₓ) gesucht werden, die in jeder Zeile der Matrix-Datenstruktur (Mₓ) jeweils höchstens ein Pixel aufweisen, wobei der Abstand zwischen zwei Pixeln benachbarter Zeilen einen vorgegebenen Schwellenwert nicht überschreitet, wobei der Spaltenindex für alle Paare von Pixeln in benachbarten Zeilen monoton ansteigt oder abfällt, und wobei die Unterschiede der Farb- und/oder Helligkeitswerte der Pixel benachbarter Zeilen einen vorgegebenen Schwellenwert nicht übersteigen.

Um den genauen Abstand eines Punktes auf einem aufgenommenen Gegenstand von der Bildaufnahmeeinheit zu ermitteln und somit ein dreidimensionales Oberflächenbild des aufgenommenen Gegenstands zu erstellen, kann vorgesehen sein, dass als Bildabschnitte (A) jeweils im Winkel zu den Koordinatenrichtungen verlaufende Geraden herangezogen werden, wobei für jede der Spalten separat und für jeden erkannten Bildabschnitt (A) separat jeweils
a) der Winkel (ω) ermittelt wird, den dieser Bildabschnitt (A) mit einer parallel zur zweiten Koordinatenrichtung verlaufenden vorgegebenen Geraden einschließt und
b) dieser Winkel (ω) in der Abbild-Datenstruktur (B) an der durch den Spaltenindex sowie durch den zweiten Index oder Aufnahmezeitpunkt (t) bezeichneten Position abgespeichert und zur Verfügung gehalten wird,
c) die Geschwindigkeit der Relativbewegung und der Bildaufnahme synchronisiert werden, sodass die von einer Sensorzeile zu einem Aufnahmezeitpunkt (t) aufgenommene Objektzeile zum nachfolgenden Aufnahmezeitpunkt t+1 von der benachbarten Sensorzeile aufgenommen wird,
d) der Abstand anhand des Winkels (w), den dieser Bildabschnitt (A) mit einer parallel zur zweiten Koordinatenrichtung verlaufenden vorgegebenen Geraden einschließt, von der Aufnahmeeinrichtung gemäß d = k · ω ermittelt wird, wobei k ein in einem Kalibrierschritt zu bestimmender Korrekturfaktor ist, und
e) dieser Abstand (d) anstelle des Winkels (w) oder gemeinsam mit dem Winkel (w) abgespeichert wird.

Eine rasche und einfache Ermittlung von Helligkeit und Farbe eines Gegenstandspunkts wird erreicht, indem für eine Anzahl von Punkten auf den Bildabschnitten (A), insbesondere auf Punkten (P) der Bildabschnitte (A), die jeweils auf einer der Bildzeilen liegen, jeweils ein Farb- und/oder Helligkeitswert ermittelt wird und dieser Wert zur Bildung der Summe oder des Mittelwerts (S) herangezogen wird.

Um eine numerisch einfache und besonders genaue Bestimmung der jeweiligen Helligkeit und Farbe eines Gegenstandspunkts zu ermitteln, kann vorgesehen sein, dass für die Punkte (P) auf den Bildabschnitten (A) jeweils der Farb- und/oder Helligkeitswert des nächstgelegenen Pixels in der Matrix-Datenstruktur (Mₓ) herangezogen wird, oder dass der Farb- und/oder Helligkeitswert durch Interpolation der Farb- und/oder Helligkeitswert der nächstgelegenen Pixel aus der Matrix-Datenstruktur (Mₓ) ermittelt wird.

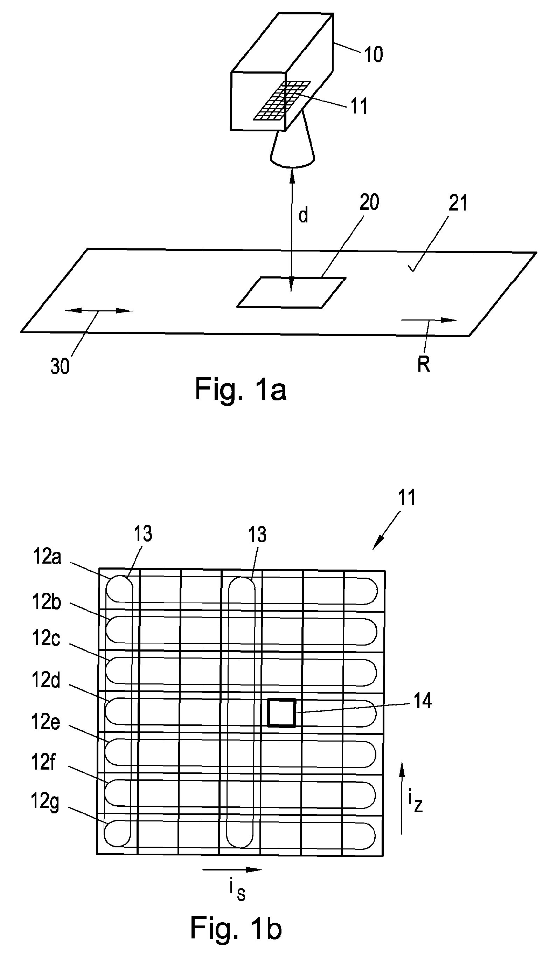

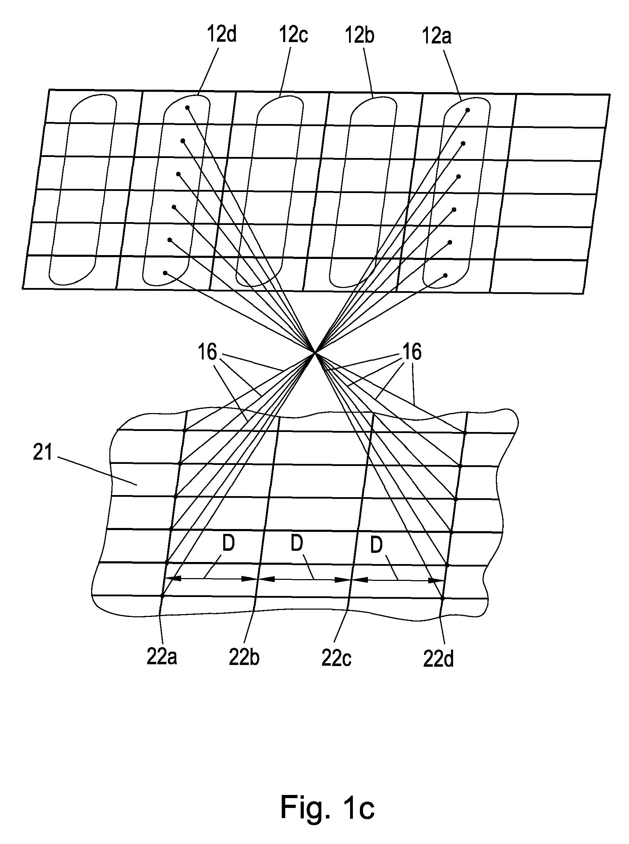

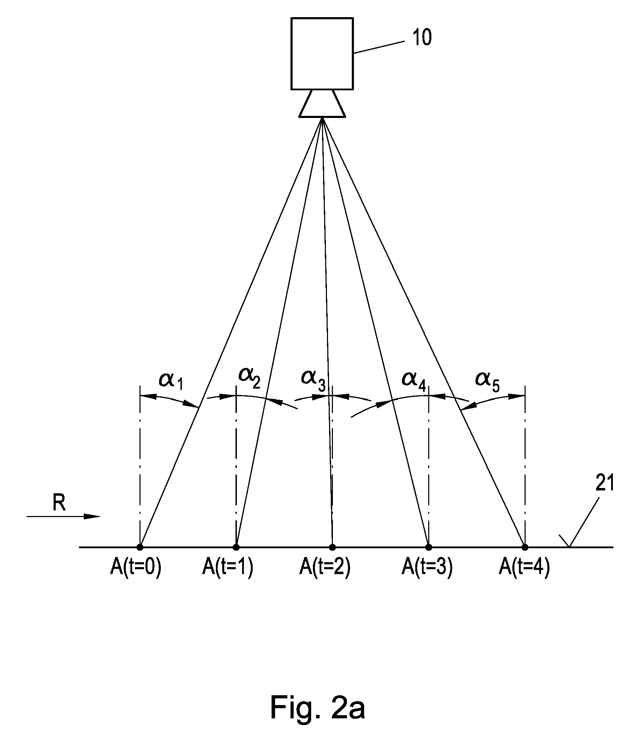

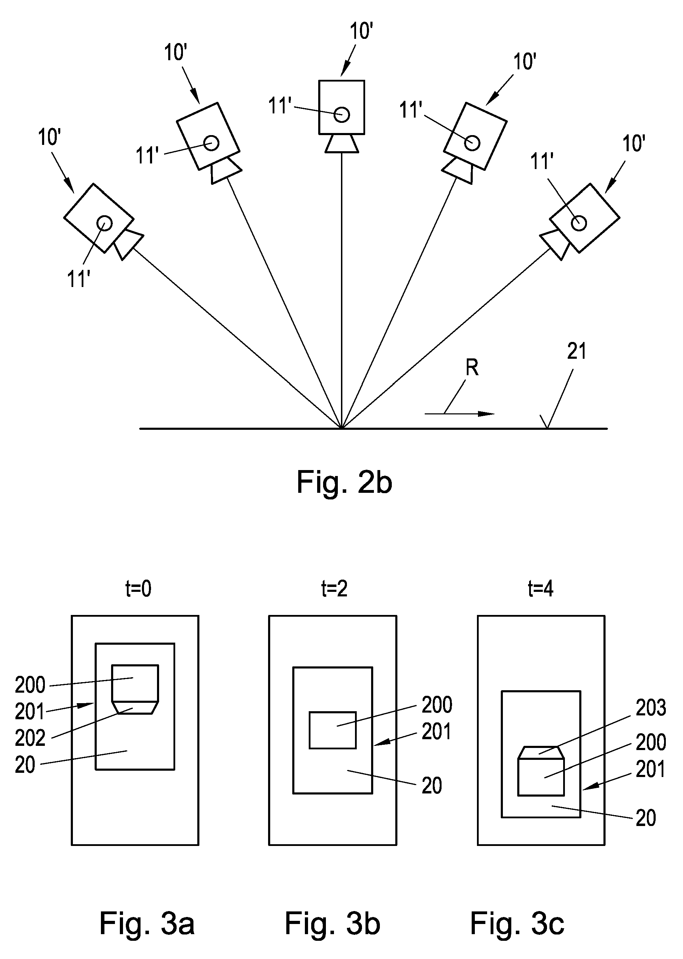

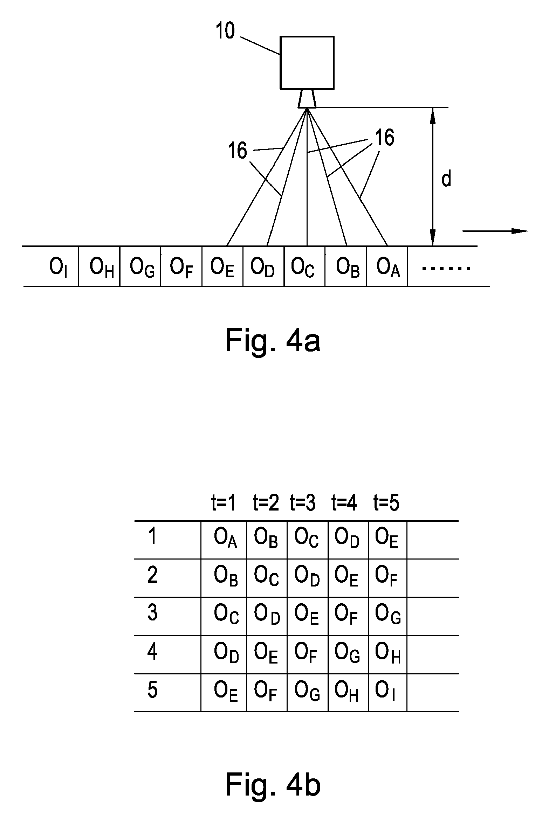

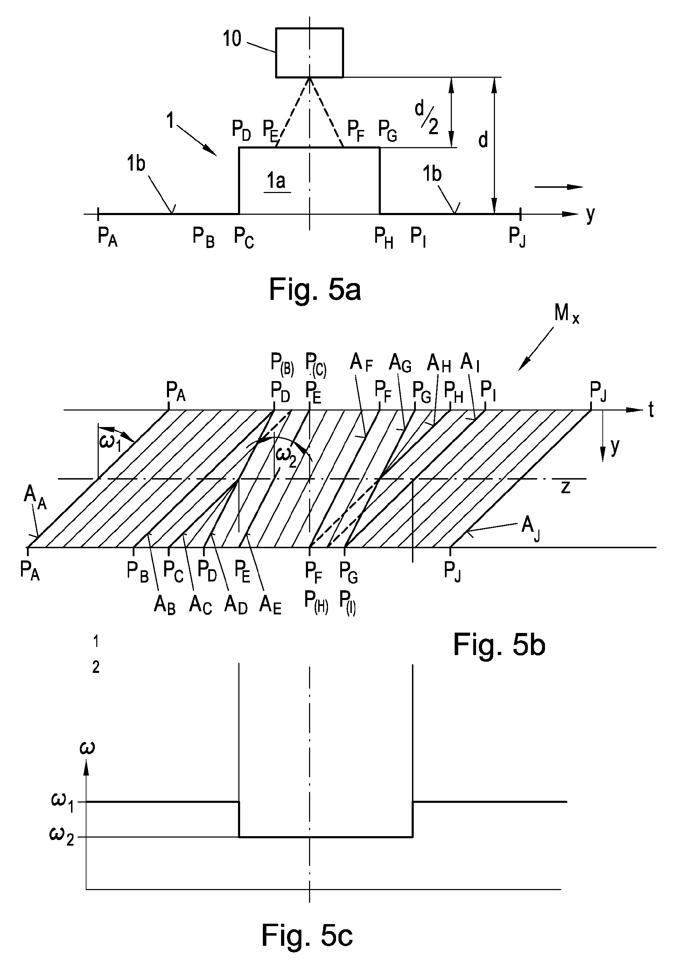

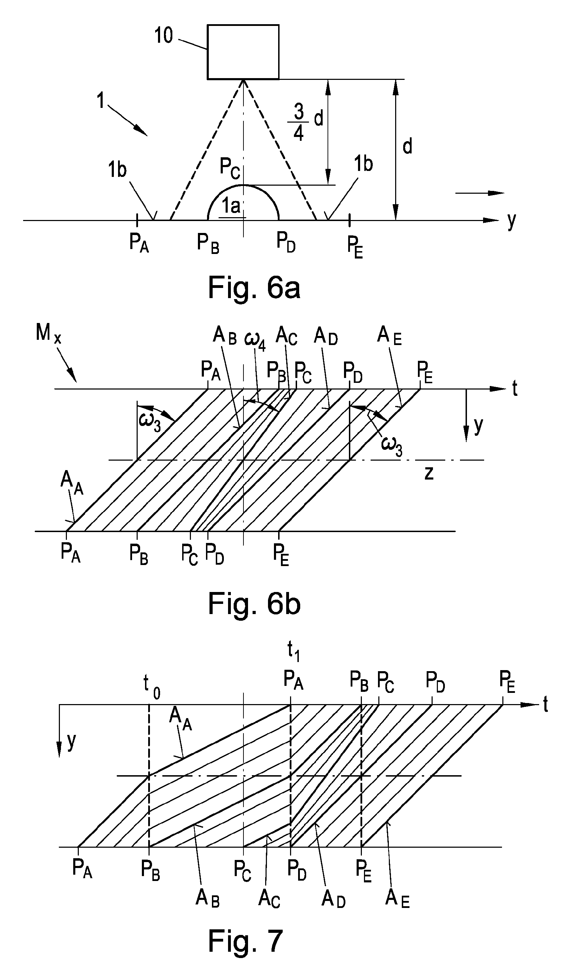

Ein bevorzugtes Ausführungsbeispiel wird anhand der folgenden Figuren näher dargestellt. **Fig. 1a** zeigt eine Transportvorrichtung sowie einen auf dieser Transportvorrichtung transportierten Gegenstand sowie eine Aufnahmeeinheit mit einem Zeilensensor. **Fig. 1b** zeigt einen Flächensensor umfassend eine Anzahl von rasterförmig in Zeilen und Spalten angeordneten Sensorpixeln. **Fig. 1c** zeigt schematisch die Sehstrahlen der einzelnen Sensorpixel des Zeilensensors. **Fig. 2a** zeigt die Aufnahme eines Gegenstandspunktes zu unterschiedlichen Zeitpunkten. In **Fig. 2b** ist eine schematische Darstellung angegeben, die die Aufnahme eines Gegenstands aus unterschiedlichen Blickwinkeln zeigt. **Fig. 3a bis 3c** zeigen einzelne im Zuge der Aufnahme ermittelte Aufnahmeergebnisse. **Fig. 4a** zeigt die Aufnahme einer Spalte eines Gegenstands mit beschrifteten Oberflächenbereichen. **Fig. 4b** zeigt die von der Spalte des Gegenstands erstellte Matrix-Datenstruktur. **Fig. 5a**, **5b, 5c** und **6a**, **6b** zeigen die Aufnahme je einer Spalte eines Gegenstands sowie des hieraus erstellten Abbilds. **Fig. 7** zeigt die Aufnahme einer Spalte des in **Fig. 6a und 6b** dargestellten Gegenstands bei Schwankungen der Transportgeschwindigkeit.

Die in **Fig. 1a** dargestellte bevorzugte Ausführungsform der Erfindung, verwendet eine Transporteinrichtung 30 zum Transport eines Gegenstandes 20 durch den Aufnahmebereich einer Bildaufnahmeeinheit 10. Diese Bildaufnahmeeinheit 10 weist einen Flächensensor 11 auf, der eine Anzahl von rasterförmigen Zeilen 12 und Spalten 13 angeordneten Sensorpixeln 14 umfasst. Die Sensorpixel 14 weisen entsprechend ihrer Anordnung im Raster des Flächensensors 11 jeweils einen Zeilenindex i_{z}, der die jeweilige Zeile 12 im Raster sowie einen Spaltenindex iₛ, der die jeweilige Spalte 13 im Raster angibt, auf.

Die in **Fig. 1a** dargestellte Vorrichtung weist eine Fördereinheit 30 auf, mittels der ein Gegenstand 20 durch den Aufnahmebereich der Bildaufnahmeeinheit 10 befördert wird. Als Gegenstand 20 wird im vorliegenden Ausführungsbeispiel eine Banknote oder ein sonstiges Druckwerk herangezogen, das im Wesentlichen flach ausgebildet ist. Der Gegenstand 20 wird in einer Gegenstandsebene 21 relativ zur Bildaufnahmeeinheit in einem vorgegebenen Abstand d bewegt. Dabei vollführt der Gegenstand 20 gegenüber der Bildaufnahmeeinheit 10 eine translatorische Relativbewegung, wobei der Gegenstand 20 parallel zur Richtung der Spalten des Flächensensors 11 bewegt wird. Die Gegenstandsebene 21 steht im vorliegenden Ausführungsbeispiel normal zur optischen Achse der Bildaufnahmeeinheit 10 und ist im Bezug auf diese optische Achse gegenüber der Bildaufnahmeeinheit 10 mit einem Abstand d beabstandet.

Im vorliegenden Ausführungsbeispiel weist der Flächensensor 11, wie in **Fig. 1b** dargestellt, eine Vielzahl von rasterförmig in Zeilen 12 und Spalten 13 angeordneten Sensorpixeln 14 auf. Durch die rasterförmige Anordnung kann jedem der Sensorpixel 14 jeweils ein Zeilenindex i_{z} sowie ein Spaltenindex iₛ zugeordnet werden. Die Anzahl der im vorliegenden Ausführungsbeispiel verwendeten Spalten 13 bestimmt die Auflösung, mit der der Gegenstand 20 normal zur Fortbewegungsrichtung R aufgenommen wird. Die Anzahl der Zeilen 12a bis 12g bestimmt die Anzahl und Lage der unterschiedlichen Blickwinkel, unter denen der Gegenstand im Zuge seiner Relativbewegung gegenüber der Bildaufnahmeeinheit aufgenommen wird.

In **Fig. 1c** ist schematisch die Lage der Sehstrahlen 16 der einzelnen Sensorpixel dargestellt. Hierbei ist zu erkennen, dass die Sehstrahlen der Sensorpixel jeder Zeile, z.B. der Zeile 12b, die Gegenstandsebene 21 jeweils auf parallelen, zur Transportrichtung R normalen Geraden 22b schneiden. Jeder Zeile 12a, 12b, 12c des Flächensensors 11 kann damit jeweils genau eine Gerade 22a, ..., 22c auf der Gegenstandsebene 21 zugeordnet werden, auf der die jeweiligen Schnittpunkte der Sehstrahlen der Sensorpixel der jeweiligen Zeile mit der Gegenstandsebene 21 liegen. Diese Geraden 22a, 22b, 22c liegen zu den jeweils benachbarten Geraden 22a, ..., 22c parallel und weisen zueinander jeweils gleiche Abstände D auf.

Wird der Gegenstand 20 bei seiner Relativbewegung entlang der Fortbewegungsrichtung R gegenüber der Bildaufnahmeeinheit 10 bewegt, so wird er zu unterschiedlichen Zeitpunkten t, t+1, t+2 ... jeweils unter einem unterschiedlichen Blickwinkel α1, α2 usw. abgebildet.

Mit dem im Folgenden dargestellten Vorgehen wird erreicht, dass für jeden aufgenommenen Gegenstandspunkt des Gegenstands 20 jeweils Aufnahmen zur Verfügung stehen, die diesen aus unterschiedlichen Winkeln α1 bis α5 zeigen und somit ein Bewegungslichtfeld des Gegenstands 20 ergeben.

Mit diesem Vorgehen ist es möglich, eine Wirkung zu erzielen, die der in **Fig. 2b** dargestellten Aufnahmevorrichtung entspricht, wobei jede der in **Fig. 2b** dargestellten Aufnahmeeinrichtungen 10' jeweils einen Zeilensensor 11' aufweist, der normal zur Fortbewegungsrichtung sowie zur Sichtebene der **Fig. 2b** steht.

In den **Fig. 3a, 3b und 3c** sind jeweils Aufnahmen eines Gegenstandes 20 mit einer auf diesem befindlichen Erhebung 200 abgebildet. Während sich das Aussehen des in der Gegenstandsebene 21 liegenden Grundkörpers 201 des Gegenstands im Verlauf der Zeit nicht ändert, zeigt die Abbildung der auf dem Gegenstand 20 befindlichen Erhebung 200 doch deutliche Unterschiede, die darauf zurückzuführen sind, dass die Erhebung 200 aus der Gegenstandsebene 21 herausragt. Insbesondere können in den **Fig. 3a und 3c** aufragende Seitenflächen 202, 203 erkannt werden, die aus einer in **Fig. 3b** dargestellten Draufsicht auf die Erhebung 200 nicht erkennbar sind.

Zu jedem Aufnahmezeitpunkt t wird jeweils ein Abbild des Gegenstands 1 mit dem Flächensensor 11 bzw. der Bildaufnahmeeinheit 10 aufgezeichnet. Hierbei werden die Werte, die von den einzelnen Spalten 13 von Sensorpixeln 14 der Bildaufnahmeeinheit 10 herrühren bzw. die von ihnen erstellten Farb- und Helligkeitsmesswerte getrennt und jeweils in einer separaten bildartigen zweidimensionalen Matrix-Datenstruktur Mₓ (y, t) erstellt, wobei x dem Spaltenindex entspricht, der die Position der Spalte 13 der Sensorpixel bezeichnet. In **Fig. 4** ist eine solche Spalte 13 des Gegenstands 1 und der Sensorpixel 14 dargestellt. Einzelne Oberflächenbereiche des Gegenstands sind jeweils mit Buchstaben A bis I bezeichnet. Die einzelnen Sensorpixel 13 der Bildaufnahmeeinheit 10 erfassen zum ersten Aufnahmezeitpunkt t=1 die Oberflächenbereiche A bis E. Zum zweiten Aufnahmezeitpunkt erfassen die Sensorpixel 14 der Spalte 13 der Bildaufnahmeeinheit 10 die Pixel B bis F, usw.

Jede erstellte bildartige Matrix-Datenstruktur Mₓ ist zweidimensional und weist zwei Indizes y, t auf, die die beiden Koordinatenrichtungen der bildartigen Matrix-Datenstruktur Mₓ bezeichnen. Der erste Index y bzw. die erste Koordinate y des durch die Matrix-Datenstruktur Mₓ erstellten Bildes entspricht der Zeilenposition des den Farb- und Helligkeitsmesswert erstellenden Sensorpixels 14. Der zweite Index t bzw. die zweite Koordinate t der Matrix-Datenstruktur Mₓ entspricht dem Aufnahmezeitpunkt.

Es steht somit insgesamt eine Vielzahl von Aufnahmen desselben Gegenstands 1 aus unterschiedlichen Richtungen zur Verfügung, wobei die einzelnen ermittelten Farb- und Helligkeitsmesswerte in separaten zweidimensionalen Matrix-Datenstrukturen Mₓ abgespeichert sind.

Als Ergebnis soll ein Abbild des Gegenstands erstellt werden. Dieses Abbild soll in einer zweidimensionalen Abbild-Datenstruktur B abgespeichert werden, wobei die Zeilenzahl der Abbild-Datenstruktur B der Anzahl der Bildsensoren 14 pro Zeile entspricht und die Spaltenzahl der Abbild-Datenstruktur B der Anzahl der vorgenommenen Aufnahmen entspricht. Die Abbild-Datenstruktur B wird indiziert durch zwei Indizes x, t, wobei der erste Index der jeweiligen, dem Bild- und/oder Helligkeitswert aufnehmenden Bildspalte entspricht und der zweite Index t dem jeweiligen Aufnahmezeitpunkt oder dem relativen Vorschub des Gegenstands 1 bei seiner Aufnahme entspricht.

Die einzelnen Farb- und/oder Helligkeitsmesswerte werden jeweils nach der Bildspalte 13 unterteilt, wobei für jede der Bildspalten 13 jeweils eine Matrix-Datenstruktur Mₓ erstellt wird. Der Index x entspricht dabei der jeweiligen Bildspalte.

In **Fig. 4a** ist die Aufnahme einer Spalte eines Gegenstands 1 näher dargestellt. Während der Aufnahme wird der Gegenstand 1 in Richtung des dargestellten Pfeils bewegt. Die Bildaufnahmeeinheit 10 erstellt zu einzelnen Zeitpunkten t=1, ..., t=5 jeweils Aufnahmen des Gegentands 1. Der Gegenstand 1 weist eine Anzahl von Oberflächenabschnitten O_{A}, ..., Oₗ auf, die jeweils von der Bildaufnahmeeinheit 10 erfasst werden. Zu jedem Zeitpunkt wird eine Aufnahme des Gegenstands 1 erstellt, die jeweils in die Matrix-Datenstruktur Mₓ eingeführt wird. In der in **Fig. 4b** dargestellten Matrix-Datenstruktur Mₓ sind jeweils die Oberflächenabschnitten O_{A}, ..., Oₗ eingezeichnet, deren jeweilige Helligkeits- und Farbwerte in die Matrix-Datenstruktur Mₓ eingetragen werden. Da der Gegenstand 1 flach ist und immer denselben Abstand d zur Bildaufnahmeeinheit 10 aufweist, sind die Bildabschnitte in der Matrix-Datenstruktur Mₓ, auf die derselbe Gegenstandsbereich abgebildet wird, parallel und stehen im Winkel zu den Bildachsen y, t.

In **Fig. 5a** ist die Aufnahme der Zeile eines Gegenstands 1 dargestellt, der eine Erhebung 1a aufweist. Während die Basis 1 b einen Abstand d zur Bildaufnahmeeinheit 10 aufweist, weist die Erhebung 1a einen Abstand d/2 zur Bildaufnahmeeinheit 10 auf. In **Fig. 5b** ist die bei der Aufnahme der Zeile des Gegenstands 1 erstellte Matrix-Datenstruktur Mₓ dargestellt, wobei die jeweiligen Abbilder einzelner Punkte P_{A}, P_{B}, P_{C}, P_{D}, P_{E}, P_{F}, P_{G}, P_{H}, Pₗ, P_{J} des Gegenstands 1 dargestellt sind. Die auf der Basis 1b befindlichen Punkte P_{A}, P_{B}, P_{C}, P_{H}, Pₗ, P_{J} werden auf Bildabschnitte A_{A}, A_{B}, A_{C}, A_{H}, Aₗ, A_{J} abgebildet, die jeweils in einem Winkel ω= ω₁ zur y-Achse der Matrix-Datenstruktur Mₓ verlaufen. Die Bildabschnitte A_{B}, A_{C}, A_{H}, Aₗ sind teilweise durch die Bildabschnitte A_{D}, A_{E}, A_{F}, A_{G} der Punkte P_{D}, P_{E}, P_{F}, P_{G} verdeckt. Die Bildabschnitte A_{D}, A_{E}, A_{F}, A_{G} stehen im Winkel ω= ω₂ zur y-Achse der Matrix-Datenstruktur Mₓ. Der Verlauf dieses Winkels w des jeweiligen, die Zentralachse Z der Matrix-Datenstruktur Mₓ durchstoßenden Bildabschnitts A_{A}, ..., A_{J} ist in **Fig. 5c** dargestellt. Sind der Winkel w sowie die Ausrichtung der Sehstrahlen 16 der Bildaufnahmeeinheit 10 bekannt, kann der Abstand des jeweils aufgenommenen Gegenstandsbereichs P_{A}, ..., P_{J} von der Bildaufnahmeeinheit 10 ermittelt werden.

In **Fig. 6a** ist die Aufnahme einer Spalte 13 eines weiteren Gegenstands 1 dargestellt. Dieser Gegenstand 1 weist eine Basis 1 b sowie eine Aufwölbung 1 a auf, wie dies beispielsweise bei aufgenommenen Banknoten der Fall sein kann. Der Punkt P_{C} befindet sich auf der Aufwölbung 1a und hat einen Abstand 3/4d zur Bildaufnahmeeinheit 10. Die übrigen Punkte P_{A}, P_{B}, P_{C}, P_{D}, befinden sich auf der Basis 1b und haben einen Abstand d zur Bildaufnahmeeinheit 10.

Die von der Spalte 13 des weiteren Gegenstands 1 erstellte Matrix-Datenstruktur Mₓ **(****Fig. 6b****)** weist Bildabschnitte A_{A}, A_{B}, A_{C}, A_{D}, A_{E} auf, auf die jeweils die auf der Basis 1b befindlichen Punkte P_{A}, P_{B}, P_{C}, P_{D}, P_{E} abgebildet sind. Diese Bildabschnitte A_{A}, A_{B}, A_{C}, A_{D}, A_{E} verlaufen im Winkel ω= ω₃ zur Bildachse y. Aufgrund der Aufwölbung 1a bewegt sich der Punkt P_{C} scheinbar schneller durch den Aufnahmebereich der Bildaufnahmeeinheit 10, sein Abbild A_{C} weist daher einen kleineren Winkel ω=δ zur Bildachse y auf.

Innerhalb der einzelnen, den jeweiligen Spalten 13 zugewiesenen Matrix-Datenstrukturen Mₓ wird nach zusammenhängenden Bildabschnitten A mit gleicher oder ähnlicher Farbe gesucht, die im Winkel zur ersten und zweiten Koordinatenrichtung t verlaufen. Im vorliegenden Ausführungsbeispiel werden als Bildabschnitte Teilmengen der Matrix-Datenstruktur Mₓ gesucht, die in jeder Bildzeile 12 höchstens ein Pixel aufweisen. Üblicherweise können hierbei nach den nachstehenden Kriterien Teilmengen gefunden werden, die in jeder Bildzeile 12 genau ein Pixel aufweisen. Der Abstand zwischen zwei in benachbarten Bildzeilen 12 gelegenen Pixel liegt dabei unterhalb eines vorgegebenen Schwellenwerts. Dieser Schwellenwert wird durch die Vorschubgeschwindigkeit bzw. Relativgeschwindigkeit des Gegenstands 1 gegenüber der Bildaufnahmeeinheit 10 sowie die Bildaufnahmerate festgelegt. Innerhalb des Bildabschnitts A befinden sich jeweils Pixel, auf die im Zuge der Aufnahme derselbe Gegenstandsbereich des Gegenstands 1 abgebildet wurde. Aufgrund des Vorschubs und der Bildaufnahmerate kann ausgeschlossen werden, dass der Versatz zweier vom selben Gegenstandsbereich des Gegenstands 1 herrührender Aufnahmen einen vorgegebenen Schwellenwert überschreitet. Die Bildabschnitte A sind aufgrund der konkreten Erstellung des Bilds mit einer Relativbewegung des Gegenstands 1 gegenüber der Bildaufnahmeeinheit 10 gegenüber der ersten und zweiten Koordinatenachse der Matrix-Datenstruktur Mₓ jeweils nach derselben Richtung geneigt, sodass der Spaltenindex x der Pixel benachbarter Zeilen mit dem Zeilenindex entweder für sämtliche Pixelpaare monoton ansteigt oder monoton abfällt, je nachdem, nach welcher Richtung sich der Gegenstand bei seiner Aufnahme gegenüber der Bildaufnahmeeinheit 10 bewegt. Weiters wird festgelegt, dass sich die Unterschiede der Farb- und/oder Helligkeitswerte der Pixel benachbarter Zeilen einen vorgegebenen Schwellenwert nicht übersteigen.

Eine bevorzugte Auswahl von Bildabschnitten A kann dadurch getroffen werden, dass diese Bildabschnitte A linienförmig ausgebildet sind bzw. Pixel aufweisen, die sich auf derselben in Bezug auf die Matrix-Datenstruktur Mₓ verlaufenden Linie befinden. Für jede Spalte bzw. für jede Matrix-Datenstruktur Mₓ und für jeden darin erkannten Bildabschnitt A wird jeweils separat der Winkel w ermittelt, den der Bildabschnitt A mit einer parallel zur zweiten Koordinatenrichtung verlaufenden vorgegebenen Geraden einschließt. Ausgehend von dem so ermittelten Winkel ω, der zusätzlich in der Abbilddatenstruktur an der durch den Spaltenindex und durch den zweiten Index oder Zeitpunkt bezeichneten Position abgespeichert wird, kann zu jedem Aufnahmezeitpunkt der Abstand d des jeweiligen Gegenstands ermittelt werden. Hier ergibt sich der Winkel ω als Winkel zwischen einer den Bildabschnitt A charakterisierenden Geraden und einer parallel zur zweiten Koordinatenrichtung verlaufenden vorgegebenen Geraden. Anstelle des Textes zur Messung der Geschwindigkeit kann auch vorgesehen sein, dass die ein Bildaufnahmerate und die Objektgeschwindigkeit so gewählt sind, dass sich zwischen zwei Aufnahmen das Objekt um genau eine Sensorzeile weiterbewegt. Der Abstand d kann gemäß d(w, iₛ) = k(iₛ) · w bestimmt werden. Der Abstand d wird anstelle des Winkels ω oder gemeinsam mit dem Winkel α in der Abbild-Datenstruktur B abgespeichert. Der Korrekturfaktor k(iₛ) wird in einem Kalibrierschritt mittels in bekannten Abständen d₁ und d₂ aufgenommenen Linienkalibriermuster bestimmt und ist aufgrund von Linsenverzeichnung vom Sensorspaltenindex iₛ abhängig.

Um nun das tatsächliche Aussehen des Gegenstandsbereichs des Gegenstands 1, der im Zuge der Aufnahme mehrfach auf einzelne Sensorpixel des Flächensensors 11 abgebildet wurde, zu ermitteln, wird für jeden einzelnen der Bildabschnitte A die Summe oder ein Mittelwert S der Farb- und Helligkeitsmesswerte der den Bildabschnitt A zugehörigen Pixel ermittelt. Es wird ein zweiter Index oder Zeitpunkt t ermittelt, bei dem der Bildabschnitt A eine im Bild der Matrix-Datenstruktur Mₓ parallel zur zweiten Koordinatenrichtung t verlaufende Gerade schneidet. Die Summe oder der Mittelwert S wird in der Abbild-Datenstruktur an der durch den Spaltenindex x sowie durch den zweiten Index oder Zeitpunkt t bezeichneten Position abgespeichert.

Wird ein Bildabschnitt A durch eine im Bild verlaufende Gerade bezeichnet, so ist dadurch nicht zwingend eine den Bildabschnitt A charakterisierende Teilmenge von Pixeln beschrieben, aus denen Farb- und Helligkeitsmesswerte für die Bildung einer Summe oder eines Mittelwerts S herangezogen werden können. Daher wird ausgehend von der ermittelten Geraden eine Anzahl von Punkten bestimmt, die sich auf oder in einer Umgebung der Gerade des Bildabschnitts A befinden. Diese Punkte können jeweils zentral auf einer Bildzeile gesetzt werden. Für diese Punkte wird jeweils ein Farb- und/oder Helligkeitswert ermittelt und die so ermittelten Farb- und/oder Helligkeitswerte werden zur Bildung der Summe oder des Mittelwerts S herangezogen. Dabei können unterschiedliche Vorgehensweisen zur Zuordnung der Farb- und/oder Helligkeitswerte zu den Punkten herangezogen werden, da aufgrund der Angabe des Winkels der Punkt nicht notwendigerweise exakt an einer Pixelposition liegt. Hierbei kann entweder der Farb- und/oder Helligkeitswert des jeweils nächstliegenden Pixels in der Matrix-Datenstruktur Mₓ herangezogen werden. Es besteht jedoch auch die Möglichkeit, dass die Farb- und/oder Helligkeitswerte durch Interpolation der Farb- und/oder Helligkeitswerte der nächstgelegenen Pixel ermittelt werden.

In **Fig. 7** ist eine Matrix-Datenstruktur Mₓ dargestellt, die erstellt wurde, während die Geschwindigkeit des in **Fig. 6a** dargestellten Gegenstands 1 kurzfristig schwankte und die Bildaufnahmerate nicht entsprechend angepasst werden konnte. Im Prinzip kann die Geschwindigkeit sogar variieren, wenn Bewegungsgeschwindigkeit und Bildaufnahmerate und -geschwindigkeit synchronisiert sind. Verzerrungen der Linien können dennoch kurzzeitig auftreten, da es sich um ein Regelungsproblem handelt. Dies ist auch beim gängigem System der Fall. Zwischen dem Zeitpunkt t₀ und t₁ war die Geschwindigkeit des Gegenstands 1 nur halb so groß wie vor t₀ und nach t₁. Die von den einzelnen Punkten P_{A}, P_{B}, P_{C}, P_{D}, P_{E} erstellten Abbilder A_{A}, A_{B}, A_{C}, A_{D}, A_{E} weisen aufgrund der kurzfristigen Geschwindigkeitsschwankung während der Aufnahme jeweils zwei Knicke auf.

Mit dem erfindungsgemäßen Vorgehen können die Farb- und/oder Helligkeitswerte der einzelnen Farb- und/oder Intensitätswerte die von den Punkten P_{A}, P_{B}, P_{C}, P_{D}, P_{E} ausgehen, ermittelt werden, ohne dass es hierbei zu den für Standard-TDI-Verfahren typischen Unschärfen kommt. Mit dem vorliegenden Verfahren können Farb- und/oder Helligkeitswerte jeweils konkret einem Punkt P_{A}, P_{B}, P_{C}, P_{D}, P_{E} zugeordnet werden. Sofern die Transportgeschwindigkeit bekannt ist, kann auch der Abstand d des Gegenstands 1 von der Bildaufnahmeeinheit 10 bestimmt werden.

## Patentansprüche

1. Verfahren zur Erstellung eines Abbilds eines Gegenstands (1) mittels einer einen Flächensensor (11) aufweisenden Bildaufnahmeeinheit (10),
- wobei der Flächensensor (11) eine Anzahl von rasterförmig in Zeilen (12) und Spalten (13) angeordneten Sensorpixeln (14) aufweist, denen entsprechend ihrer Anordnung jeweils ein Zeilenindex (i_{z}) und ein Spaltenindex (iₛ) zugewiesen wird,
- wobei der Gegenstand (20) und die Bildaufnahmeeinheit (10) eine translatorische Relativbewegung parallel zur Richtung der Spalten (13) des Flächensensors (11) vollführen,
- wobei der Gegenstand (20) auf einer zur Bildaufnahmeeinheit (10) mit einem vorgegebenen Abstand (d) beabstandet liegenden Gegenstandsebene (21) relativ zur Bildaufnahmeeinheit (10) und den Aufnahmebereich der Bildaufnahmeeinheit (10) bewegt wird, und
- wobei die von jeweils einer Spalte (13) von Sensorpixeln (14) der Bildaufnahmeeinheit (10) erstellten Farb- und Helligkeitsmesswerte jeweils in einer bildartigen, zweidimensionalen Matrix-Datenstruktur Mₓ(y, t) mit zwei Indizes (y, t) und zwei Koordinatenrichtungen zur Verfügung gehalten werden, wobei der erste Index (y) und die erste Koordinate (y) der Zeilenposition des den Farb- und Helligkeitsmesswert erstellenden Sensorpixels (14) entspricht und der zweite Index (t) und die zweite Koordinate (t) dem Aufnahmezeitpunkt entspricht, und der Spaltenindex (x) die Position der Spalte (13) bezeichnet,
- wobei eine zweidimensionale Abbild-Datenstruktur (B) als Abbild erstellt wird, deren Zeilenzahl der Anzahl der Bildsensoren (14) pro Zeile (12) entspricht und deren Spaltenzahl durch die Anzahl der vorgenommenen Aufnahmen vorgegeben wird, wobei die Abbild-Datenstruktur (B) einen ersten Index (x) aufweist, der der den Farb- und/oder Helligkeitsmesswert aufnehmenden Bildspalte (13) entspricht und einen zweiten Index (t) aufweist, der dem jeweiligen Aufnahmezeitpunkt und dem relativen Vorschub des Gegenstands (1) entspricht, und
- wobei für jede, der Bildspalten (13) separat
- innerhalb der jeweiligen der Bildspalte (13) mit dem Spaltenindex (x) zugewiesenen Matrixdatenstruktur Mₓ(y, t) nach zusammenhängenden, insbesondere linienförmigen, Bildabschnitten (A) mit gleicher oder ähnlicher Farbe gesucht wird, die im Winkel zur ersten und zweiten Koordinatenrichtung verlaufen,
- dass separat für jeden der einzelnen Bildabschnitte (A)
-- die Summe oder ein Mittelwert (S) der Farb- und Helligkeitsmesswerte der dem Bildabschnitt (A) zugehörigen Pixel ermittelt wird,
-- ein zweiter Index oder Zeitpunkt (t) ermittelt wird, bei dem der Bildabschnitt (A) eine im Bild der Matrixdatenstruktur (**Mₓ**(**y**, **t))** parallel zur zweiten Koordinatenrichtung **(t)** verlaufende vorgegebene Gerade schneidet, und
-- die Summe oder der Mittelwert (S) in der Abbild-Datenstruktur (B) an der durch den Spaltenindex (x) sowie durch den zweiten Index oder Zeitpunkt (t) bezeichneten Position abgespeichert und zur Verfügung gehalten wird.

2. Verfahren nach einem der vorangehenden Ansprüche, **dadurch gekennzeichnet, dass** als Bildabschnitte (A) Teilmengen der Matrix-Datenstruktur (Mₓ) gesucht werden, die in jeder Zeile der Matrix-Datenstruktur (Mₓ) jeweils höchstens ein Pixel aufweisen, wobei der Abstand zwischen zwei Pixeln benachbarter Zeilen einen vorgegebenen Schwellenwert nicht überschreitet, wobei der Spaltenindex für alle Paare von Pixeln in benachbarten Zeilen monoton ansteigt oder abfällt, und wobei die Unterschiede der Farb- und/oder Helligkeitswerte der Pixel benachbarter Zeilen einen vorgegebenen Schwellenwert nicht übersteigen.

3. Verfahren nach Anspruch 1 oder 2, **dadurch gekennzeichnet, dass** als Bildabschnitte (A) jeweils im Winkel zu den Koordinatenrichtungen verlaufende Geraden herangezogen werden, wobei für jede der Spalten separat und für jeden erkannten Bildabschnitt (A) separat jeweils
a) der Winkel (ω) ermittelt wird, den dieser Bildabschnitt (A) mit einer parallel zur zweiten Koordinatenrichtung verlaufenden vorgegebenen Geraden einschließt und
b) dieser Winkel (ω) in der Abbild-Datenstruktur (B) an der durch den Spaltenindex sowie durch den zweiten Index oder Aufnahmezeitpunkt (t) bezeichneten Position abgespeichert und zur Verfügung gehalten wird,
c) die Geschwindigkeit der Relativbewegung und der Bildaufnahme synchronisiert werden, sodass die von einer Sensorzeile zu einem Aufnahmezeitpunkt (t) aufgenommene Objektzeile zum nachfolgenden Aufnahmezeitpunkt t+1 von der benachbarten Sensorzeile aufgenommen wird,
d) der Abstand anhand des Winkels (w), den dieser Bildabschnitt (A) mit einer parallel zur zweiten Koordinatenrichtung verlaufenden vorgegebenen Geraden einschließt, von der Aufnahmeeinrichtung gemäß d = k · ω ermittelt wird, wobei k ein in einem Kalibrierschritt zu bestimmender Korrekturfaktor ist, und
e) dieser Abstand (d) anstelle des Winkels (w) oder gemeinsam mit dem Winkel (w) abgespeichert wird.

4. Verfahren nach einem der vorangehenden Ansprüche, **dadurch gekennzeichnet, dass** für eine Anzahl von Punkten auf den Bildabschnitten (A), insbesondere auf Punkten (P) der Bildabschnitte (A), die jeweils auf einer der Bildzeilen liegen, jeweils ein Farb- und/oder Helligkeitswert ermittelt wird und dieser Wert zur Bildung der Summe oder des Mittelwerts (S) herangezogen wird.

5. Verfahren nach Anspruch 4, **dadurch gekennzeichnet, dass** für die Punkte (P) auf den Bildabschnitten (A) jeweils der Farb- und/oder Helligkeitswert des nächstgelegenen Pixels in der Matrix-Datenstruktur (Mₓ) herangezogen wird, oder dass der Farb- und/oder Helligkeitswert durch Interpolation der Farb- und/oder Helligkeitswert der nächstgelegenen Pixel aus der Matrix-Datenstruktur (Mₓ) ermittelt wird.

## Claims

1. Method for creating an image of an object (1) by means of a surface sensor (11) having an image recording unit (10),
- wherein the surface sensor (11) comprises a number of sensor pixels (14) arranged in a grid-like manner in rows (12) and columns (13), which are assigned a row index (i_{z}) and a column index (iₛ) according to their respective arrangement.
- wherein the article (20) and the image recording unit (10) perform a relative translational movement parallel to the direction of the columns (13) of the surface sensor (11),
- wherein the article (20) is moved relative to the image recording unit (10) on an article plane (21) lying at a predetermined distance (d) from the image recording unit (10) and the recording area of the image recording unit (10), and
- wherein the color and brightness values produced by each column (13) of sensor pixels (14) of the image recording unit (10) are respectively held available in an image-like two-dimensional matrix data structure Mₓ(y, t) with two indices (y, t) and two coordinate directions, wherein the first index (y) and the first coordinate (y) of the line position of the sensor pixel (14) produced, correspond to the color and brightness measured value, while the second index (t) and the second coordinate (t) correspond to the recording time, and the column index (x) denotes the position of the column (13),
- wherein a two-dimensional image data structure (B) is produced as the image whose line number corresponds to the number of the image sensor (14) per line (12), and whose column number is determined by the number of images taken, wherein the image data structure (B) comprises a first index (x) which corresponds to the image column (13) recording the color and/or brightness measured value, and comprises a second index (t), which corresponds to the respective recording time and the relative feed of the article (1), and
- wherein for each of the image columns (13) is/are held separately
-- within each of the image columns (13) with the column index (x) assigned to the matrix data structure Mₓ(y, t) are sought contiguous, in particular linear, image sections (A) having the same or similar color and which extend in the angle to the first and second coordinate directions.
- wherein separately for each of the individual image sections (A)
-- the sum or a mean value (S) of the color and brightness measurement values of the pixels corresponding to the image section (A) is determined,
-- a second index or time (t) is determined, wherein the image section (A) is cut by a predetermined line extending parallel to the second coordinate direction (t) in the image of the matrix data structure (Mₓ(y, t)), and
-- the sum or the mean value (S) in the image data structure (B) at the position designated by the column index (x) as well as by the second index or point in time (t) is stored and kept available.

2. Method according to any one of the preceding claims,
**characterized in that**
subsets of the matrix data structure (Mx), each having at most one pixel, are sought as image sections (A) in each line of the matrix data structure (Mx), wherein the distance between two pixels of adjacent lines does not exceed a predetermined threshold value, wherein the column index monotonically increases or decreases for all pairs of pixels in adjacent rows, and wherein the differences of the color and/or brightness values of the pixels of adjacent rows do not exceed a predetermined threshold.

3. Method according to claim 1 or 2,
**characterized in that**
each straight line extending at an angle to the coordinate directions is used as an image section (A), wherein for each of the columns separately and, for each recognized image section separately (A) respectively
a) the angle (ω) which encloses this image section (A) with a predetermined straight line extending parallel to the second coordinate direction, is determined, and
b) the angle (ω) in the image data structure (B) at the position designated by the column index, and by the second index, or by the recording time (t) is stored and kept available,
c) the speed of the relative movement and the image recording are synchronized, so that the object line from a sensor line to a recording time (t) to the next recording time t + 1 is recorded by the adjacent sensor line,
d) the distance is determined on the basis of the angle (ω), which encloses the image section (A) with a predetermined line extending parallel to the second coordinate direction from the recording unit, according to d = k. ω, where k is a calibration factor to be determined in a correction step, and
e) the distance (d) is stored in place of the angle (ω) or together with the angle (ω).

4. Method according to any one of the preceding claims,
**characterized in that**
a color and/or brightness value is determined for a number of points on the image sections (A), and in particular the points (P) on the image sections (A), which respectively lie on one of the image lines, and this value is used to form the sum or the mean value (S).

5. Method according to claim 4,
**characterized in that**
a color and/or brightness value of the adjacent pixel in the matrix data structure (Mₓ) is respectively used for the points (P) on the image sections (A), or the color and/or brightness value is determined by interpolation of the color and/or brightness value of the adjacent pixel from the matrix data structure (Mₓ).

## Revendications

1. Procédé de création d'une représentation d'un objet (1) au moyen d'une unité d'enregistrement d'image (10) comprenant un capteur de surface (11),
- le capteur de surface (11) comprenant un nombre de pixels de capteur (14) disposés sous la forme d'une grille en lignes (12) et colonnes (13), auxquels, en fonction de leur disposition, sont attribués un indice de ligne (iz) et un indice de colonne (is),
- l'objet (20) et l'unité d'enregistrement d'image (10) effectuant un mouvement de translation relatif parallèle à la direction des colonnes (13) du capteur de surface (11),
- l'objet (20) étant déplacé sur un plan d'objet (21) se trouvant à une certaine distance (d) prédéterminée par rapport à l'unité d'enregistrement d'image (10), par rapport à l'unité d'enregistrement d'image (10) et à la zone d'enregistrement de l'unité d'enregistrement d'image (10) et
- les valeurs de mesure de couleur et de luminosité créées par une colonne (13) de pixels de capteur (14) de l'unité d'enregistrement d'image (10) étant mises à disposition dans une structure de données matricielle bidimensionnelle (Mx(y, t) avec deux indices (y, t) et directions de coordonnées, le premier indice (y) et la première coordonnée (y) correspondant à la position de la ligne du pixels de capteur (14) créant la valeur de mesure de couleur et de luminosité et le deuxième indice (t) et la deuxième coordonnée (t) correspondant au moment d'enregistrement et l'indice de colonne (x) désignant la position de la colonne (13),
- une structure de données de représentation (B) bidimensionnelle est créée en tant que représentation, dont le nombre de lignes correspond au nombre de capteurs d'image (14) par ligne (12) et dont le nombre de colonnes est prédéterminé par le nombre d'enregistrements effectués, la structure de données de représentation (B) comprenant un premier indice (x) qui correspond à la colonne d'image (13) enregistrant la valeur de mesure de couleur et/ou de luminosité et comprenant un deuxième indice (t) qui correspond au moment d'enregistrement et à l'avance relative de l'objet (1) et
- pour une des colonnes d'image (13) séparément,
- à l'intérieur de la structure de données matricielle Mx(y, t) correspondant à la colonne d'image (13) avec l'indice de colonne (x), on recherche des portions d'image (A) dépendantes, plus particulièrement linéaires avec la même couleur ou une couleur similaire qui s'étendant avec un angle par rapport à la première ou à la deuxième direction de coordonnée,
- de façon à ce que, séparément pour chacune des portions d'image (A),
- la somme ou une moyenne (S) des valeurs de mesure de couleur et de luminosité des pixels correspondant à la portion d'image (A) soit déterminée,
- un deuxième indice ou moment (t) soit déterminé, auquel la portion d'image (A) coupe une droite prédéterminée s'étendant dans l'image de la structure de données matricielle (Mx(y, t)), parallèlement à la deuxième direction de coordonnée et
- la somme ou la moyenne (S) soit stockée dans la structure de données de représentation (B) au niveau de la position désignée par l'indice de colonne (x) ainsi que par le deuxième indice ou moment (t) et mise à disposition.

2. Procédé selon l'une des revendications précédentes, **caractérisé en ce que**, en tant que portions d'image (A), des quantités partielles de la structure de données matricielle (Mx) sont recherchées, qui présentent dans chaque ligne de la structure de données matricielle (Mx) chacune au maximum un pixel, la distance entre deux pixels de lignes adjacentes ne dépassant pas une valeur seuil prédéterminée, l'indice de colonne pour toutes les paires de pixels dans des lignes adjacentes augmentant ou diminuant de manière monotone et les différences entre les valeurs de mesure de couleur et/ou de luminosité des pixels de lignes adjacentes ne dépassant pas une valeur seuil prédéterminée.

3. Procédé selon la revendication 1 ou 2, **caractérisé en ce que**, en tant que portions d'image (A), des droites s'étendant avec un angle par rapport aux directions des coordonnées sont utilisées, moyennant quoi, pour chacune des colonnes séparément et pour chaque portion d'image (A) détectée,
a) l'angle (ω) que forme cette portion d'image (A) avec une droite prédéterminée s'étendant parallèlement à la deuxième direction de coordonnée est déterminé et
b) cet angle (ω) est stocké dans la structure de données matricielle (B) au niveau de la position désignée par l'indice de colonne ainsi que par le deuxième indice ou le moment d'enregistrement (t) et mis à disposition,
c) la vitesse du mouvement relatif et de l'enregistrement d'image sont synchronisées de façon à ce que la ligne de l'objet enregistrées par une ligne de capteur à un moment d'enregistrement (t) soit enregistrée à un moment d'enregistrement suivant t+1 par la ligne de capteur adjacente,
d) la distance est déterminée à l'aide de l'angle (ω), que forme cette portion d'image (A) avec une droite prédéterminée s'étendant parallèlement à la deuxième direction de coordonnée, par le dispositif d'enregistrement selon la formule d = k.ω, k étant un facteur de correction à déterminer dans une étape d'étalonnage et
e) cette distance (d) est stockée à la place de l'angle (ω) ou avec l'angle (ω)

4. Procédé selon l'une des revendications précédentes, **caractérisé en ce que**, pour un nombre de points sur les portions d'image (A), plus particulièrement sur les points (P) des portions d'image (A) qui se trouvent sur une des lignes d'image, une valeur de couleur et/ou de luminosité est déterminée et cette valeur est utilisée pour former la somme ou la moyenne (S).

5. Procédé selon la revendication 4, **caractérisé en ce que**, pour les points (P) sur les portions d'image (A), la valeur de couleur et/ou de luminosité du pixels le plus proche dans la structure de données matricielle (Mx) est utilisée ou **en ce que** la valeur de couleur et/ou de luminosité des pixels les plus proches est déterminée par interpolation des valeurs de couleurs et/ou de luminosité des pixels les plus proches dans la structure de données matricielle (Mx).
